# EUROPEAN PATENT SPECIFICATION

(11) **EP 3 255 306 B1**
(45) Date of publication and mention of the grant of the patent: **19.08.2020**
(21) Application number: 16746286.0
(22) Date of filing: 26.01.2016
(51) Int. Cl.: F16H 25/22, F16H 25/24

(54) **CIRCULATION PIECE**
ZIRKULATIONSSTÜCK
PIÈCE DE CIRCULATION

(30) Priority: 02.02.2015 JP 2015018724; 04.02.2015 JP 2015020483; 08.06.2015 JP 2015116031
(43) Date of publication of application: 13.12.2017
(73) Proprietor: NSK Ltd., Tokyo 141-8560 (JP)
(72) Inventor: MIYAZAKI, Kazunari, Tokyo 141-8560 (JP); KUROIWA, Daisuke, Fujisawa-shi Kanagawa 252-0811 (JP)
(74) Representative: Rings, Rolf
(86) International application number: PCT/JP2016/000380
(87) International publication number: WO 2016/125453

(56) References cited:
- EP-A1- 0 845 619
- EP-A1- 2 514 997
- JP-A- 2001 289 301
- JP-A- 2006 002 812
- JP-A- 2006 220 215
- JP-A- 2007 024 305
- JP-A- 2009 024 843

## Description

### Technical Field

The present invention relates to a circulating deflector for a ball screw according to claim 1.

### Background Art

Hitherto, an internal circulation type ball screw including a screw shaft, a nut, and rolling elements (balls, for example, and hereinafter occasionally referred to as balls) and provided with a circulating deflector which circulates the plurality of rolling elements interposed between the above screw shaft and the nut has been known.

In the ball screw of such a type, the screw shaft penetrates the nut, and a spiral groove of the screw shaft and a spiral groove of the nut form a ball rolling passage. The nut includes a ball return passage through which the balls are returned from an end point to a start point of the rolling passage. The balls are provided in a circulation path (circuit) composed of the rolling passage and the ball return passage. The ball screw is a device in which the screw shaft and the nut relatively move through the balls that circulate in the circulation path and roll in the rolling passage (travel while rolling under load). The ball return passage is formed by fitting to the nut a return tube or a deflector.

A technique disclosed in PTL 1 is an example of the ball screw of such a type and employs a return path of a circulating deflector having a tunnel shape that prevents rolling elements from coming into contact with a land portion of a screw shaft. It is disclosed that due to a circulating deflector having such a structure, the functionality as the ball screw provided with the circulating deflector can be improved as compared with a conventional internal circulation structure in which rolling elements are circulated to cross on a land portion of a screw shaft to an adjacent spiral groove.

Moreover, the technique disclosed in PTL 1 has a function of fixing to the nut the circulating deflector by an element having a cylindrical cross section which extends from a wall surface of the circulating deflector. It is disclosed that such a configuration allows the circulating deflector to be fixed by a restriction in an outside diameter direction, an axial direction, and a rotation direction of the nut.

However, as the technique disclosed in PTL 1, in a case in which a ball circulation path has a tunnel shape, merely configuring an arm extending from both walls of the circulating deflector in accordance with a ball groove to be along the ball groove from a nut inner side allows a component force in a gravity direction to be transmitted from balls to the circulating deflector during ball circulation, and a possibility of being pushed to the screw shaft increases so that there has been a possibility of malfunction and abnormal heating.

Thus, as a technique which can solve such a problem, PTL 2 discloses a ball screw in which a deflector member that forms with a ball rolling passage a ball circulation raceway is composed of a pipe made of a metal in the interior of which a circulation passage having a tunnel shape is formed to be curved and a cover portion made of a resin which covers an outside of this pipe and fits into a mounting hole provided to a nut.

In a deflector type ball screw including a deflector as a component which forms a ball return passage, the deflector is mounted in a through hole that penetrates a nut in a radial direction. With respect to methods of mounting the deflector into the through hole, methods of providing the deflector with a pair of positioning arms, inserting the deflector into the through hole from an inner circumferential surface side of a nut, and allowing each arm to engage with a spiral groove in the vicinity of the through hole of the nut have been proposed (see PTLs 3 and 4).

Moreover, in the methods disclosed in PTLs 3 and 4, for the purpose of reduction of an axial size of the nut, increase of a load capacity, reduction of the number of components, and the like, a plurality of grooves for the ball return passage are provided per deflector. As a method of fixing the deflector, a swage method and a method using a fixing member having guide walls elastically in contact with the through hole of the nut are disclosed. Further, in such a ball screw, balls ride on a land portion (outer circumferential surface) of a screw shaft at a position of the deflector and then move to the adjacent spiral groove.

PTL 5 discloses a deflector in which a ball return passage is formed in a tunnel shape to separate balls from an outer circumferential surface of a screw shaft. In this deflector, both end portions of the ball return passage are provided with a ball pick-up portion. Moreover, it is disclosed that this deflector is structured by combining a pair of half bodies obtained by diving along the ball return passage.

### Citation List

### Patent Literature

PTL 1: JP S57-33464 B2
PTL 2: JP 2003-329097 A
PTL 3: JP 3844922 B2
PTL 4: JP 3844943 B2
PTL 5: JP 2001-165274 A

JP2009024843A shows a deflector according to the preamble of claim 1.

### Summary of Invention

### Technical Problem

However, the technique disclosed in PTL 1 aims to improve a circulation function by configuring the return path to have a tunnel shape and separating the rolling elements from the screw shaft, whereas there has been a room for improving the functionality due to a behavior of the rolling elements at a doorway of the circulating deflector which is a boundary between a load region and a non-load region.

Moreover, also in the technique disclosed in PTL 2, the cover portion made of a resin which covers the pipe fits into the mounting hole of the nut to fix the pipe to the nut so that there has been a room for improvement in decrease in operationality due to increase in the number of components, and restraining malfunction and abnormal heating.

Further, in a ball screw including a deflector provided with a plurality of grooves for a ball return passage per deflector, there has been a room for improvement in simplifying a deflector fixing operation.

The present invention has been made in view of the above problem, and one of objects thereof is to provide a circulating deflector which can improve the functionality due to a behavior of rolling elements at a doorway of the circulating deflector, ameliorate the operationality, and restrain malfunction and abnormal heating.

Moreover, one of the objects of the present invention is, in the ball screw including the deflector provided with a plurality of grooves for a ball return passage per deflector, to simplify a deflector fixing operation.

### Solution to Problem

This problem is solved by means of a circulating deflector with the features of claim 1.

In order to achieve the object mentioned above, not claimed in the present invention, there is provided a circulating deflector used for a ball screw including a screw shaft including a spirally-shaped spiral groove at an outer circumferential surface, a nut including a spirally shaped spiral groove at an inner circumferential surface, the nut fitting on the screw shaft, and a plurality of rolling elements provided in a raceway formed by the spiral grooves, the circulating deflector being mounted to the nut and including a cylindrical return path for returning the rolling elements to the raceway behind, the circulating deflector including: a circulating deflector body including two divided bodies each provided with a return groove and a joining surface, the return groove forming the return path, the joining surface being formed in such a manner as to be orthogonal to the return path; and an engagement portion provided to project from each of both side surfaces of the divided bodies along the spiral groove of the ball screw and to restrict movement of the circulating deflector body, wherein the circulating deflector body is provided with a tongue portion for guiding the rolling elements into the return path, a diameter of the return path is more than 1.0 time but not greater than 1.1 times as great as that of the rolling elements, and the joining surface of each divided body is provided with a raised portion and a recessed portion for alignment.

In the above-mentioned circulating deflector, the return path may include a line for picking up the rolling elements into a direction substantially orthogonal to a pick-up angle and a line making connection of and between two or more curves in the return path.

In addition, in the above-mentioned circulating deflector, a cross section of the return path includes an oval shape including a long diameter in a radial direction.

Further, in order to achieve the object mentioned above, not claimed in the present invention, there is provided a ball screw including: a screw shaft including a spirally-shaped spiral groove at an outer circumferential surface; a nut including a spirally shaped spiral groove at an inner circumferential surface, the nut fitting on the screw shaft; a plurality of rolling elements provided in a raceway formed by the spiral grooves; and a circulating deflector mounted to the nut and including a return groove for returning the rolling elements to the raceway behind, wherein the nut is provided with a circulating deflector insertion hole into which the circulating deflector is mounted.

The circulating deflector includes: a cylindrical return path for returning the rolling elements to the raceway behind; a circulating deflector body including two divided bodies each provided with a return groove and a joining surface, the return groove forming the return path, the joining surface being formed in such a manner as to be orthogonal to the return path; and an engagement portion provided to project from each of both side surfaces of the divided bodies along the spiral groove of the ball screw and to restrict movement of the circulating deflector body, wherein the circulating deflector body is provided with a tongue portion for guiding the rolling elements into the return path, a diameter of the return path is more than 1.0 time but not greater than 1.1 times as great as that of the rolling elements, and the joining surface of each divided body is provided with a raised portion and a recessed portion for alignment.

In the above-mentioned ball screw, the return path may include a line for picking up the rolling elements into a direction substantially orthogonal to a pick-up angle and a line making connection of and between two or more curves in the return path.

In addition, in the above-mentioned ball screw, a cross section of the return path includes an oval shape including a long diameter in a radial direction.

According to the present invention, there is provided a circulating deflector used for a ball screw including a screw shaft including a spirally-shaped spiral groove at an outer circumferential surface, a nut including a spirally shaped spiral groove at an inner circumferential surface, the nut fitting on the screw shaft, and a plurality of rolling elements provided in a raceway formed by the spiral grooves, the circulating deflector being mounted to the nut and including a cylindrical return path for returning the rolling elements to the raceway behind, the circulating deflector including: a circulating deflector body including two divided bodies each provided with a return groove and a joining surface, the return groove forming the return path, the joining surface being formed in such a manner as to be orthogonal to the return path; and an engagement portion provided to project from each of both side surfaces of the divided bodies along the spiral groove of the ball screw and to restrict movement of the circulating deflector body, wherein a fixing hole is provided to the engagement portion, and a fixing member is fitted or threadedly engaged with the fixing hole, the fixing member being provided to an through hole which is provided to the nut and exposes the engagement portion.

Further, in order to achieve the object mentioned above, not claimed in the present invention, there is provided a ball screw including: a screw shaft including a spirally-shaped spiral groove at an outer circumferential surface; a nut including a spirally shaped spiral groove at an inner circumferential surface, the nut fitting on the screw shaft; a plurality of rolling elements provided in a raceway formed by the spiral grooves; and a circulating deflector mounted to the nut and including a cylindrical return path for returning the rolling elements to the raceway behind, wherein the circulating deflector includes a circulating deflector body provided with a return path and an engagement portion provided to project from each of both side surfaces of the circulating deflector along the spiral groove of the ball screw and to restrict movement of the circulating deflector body, and the nut is provided with a circulating deflector insertion hole into which the circulating deflector is mounted and a through hole which exposes the engagement portion, and a fixing member which fixes the circulating deflector by urging the engagement portion is provided to the through hole.

Further, in order to achieve the object mentioned above, not claimed in the present invention, there is provided a ball screw including: a screw shaft including a spirally-shaped spiral groove at an outer circumferential surface; a nut including a spirally shaped spiral groove at an inner circumferential surface, the nut fitting on the screw shaft; a plurality of rolling elements provided in a raceway formed by the spiral grooves; and a circulating deflector mounted to the nut and including a cylindrical return path for returning the rolling elements to the raceway behind, wherein the circulating deflector includes a circulating deflector body provided with the return path and an engagement portion provided to project from each of both side surfaces of the circulating deflector along the spiral groove of the ball screw and to restrict movement of the circulating deflector body, the nut is provided with a circulating deflector insertion hole into which the circulating deflector is mounted and a through hole which exposes the engagement portion, and a fixing member provided to the through hole is fitted to or screwed into the engagement portion.

Further, in order to achieve the object mentioned above, not claimed in the present invention, there is provided a ball screw including: a screw shaft including a spirally-shaped spiral groove at an outer circumferential surface; a nut including a spirally shaped spiral groove at an inner circumferential surface, the nut fitting on the screw shaft; a plurality of rolling elements provided in a raceway formed by the spiral grooves; and a circulating deflector mounted to the nut and including a cylindrical return path for returning the rolling elements to the raceway behind, wherein the circulating deflector includes a circulating deflector body provided with a return path and an engagement portion provided to project from each of both side surfaces of the circulating deflector along the spiral groove of the ball screw and to restrict movement of the circulating deflector body, the nut is provided with a circulating deflector insertion hole into which the circulating deflector is mounted and a through hole which exposes the engagement portion, and a fixing hole with which a fixing member provided to the through hole fits or threadedly engage is provided to the engagement portion.

In the above-mentioned ball screw, the fixing member may include a lock portion which is locked with the fixing hole.

In addition, in the above-mentioned ball screw, the circulating deflector body may be provided with a return groove that forms the return path and may include two divided bodies provided with a joining surface formed in such a manner as to be orthogonal to the return path, and the engagement portion may be provided to project from each of both side surfaces of the divided bodies along the spiral groove of the ball screw and to restrict movement of the circulating deflector body.

Further, in order to achieve the object mentioned above, not claimed in the present invention, there is provided a ball screw includes the following features (1) to (5) .
(1) The ball screw includes: a screw shaft; a nut; a plurality of balls; a deflector; and a fixing component which fixes the deflector to the nut. The screw shaft penetrates the nut. A spiral groove of the screw shaft and a spiral groove of the nut form a rolling passage through which the balls roll under load. The deflector is a component provided with a ball return passage which returns the balls from an end point to a start point of the rolling passage and is disposed in a through hole penetrating the nut in a direction intersecting with an axial direction. The balls are provided in the rolling passage and the ball return passage, and through the balls rolling in the rolling passage, the screw shaft and the nut relatively move.
(2) The deflector is provided with a plurality of the ball return passages. The ball return passage is formed into a tunnel shape by a groove provided to the deflector and a block portion which blocks an opening surface of the groove.
(3) The block portion is provided with a tongue portion which guides the balls from the end point to the ball return passage.
(4) The deflector includes a pair of alignment arms which extends along the spiral groove of the nut. The alignment arms are made to engage with the spiral groove in the vicinity of the through hole of the nut.
(5) The nut is provided with an insertion hole of the fixing component in the vicinity of the through hole. The deflector is fixed to the nut by fixing the fixing component as inserted into the insertion hole from an outer side to a fixing portion provided to the alignment arms.
   The ball screw may include a feature (6) in addition to the above-mentioned features (1) to (5) . In such a case, not only a deflector fixing operation can be simply performed, but also an effect of decreasing the manufacturing cost of the deflector is obtained. The following feature (6) is not an essential requirement of the present invention
(6) The deflector includes a plurality of divided bodies divided by an end surface along the ball return passage. The divided bodies include a pair of end components provided with the alignment arms and an intermediate component disposed between the pair of end components.

### Advantageous Effects of Invention

According to an aspect of the present invention, it is possible to provide a circulating deflector which can improve the functionality due to a behavior of rolling elements at a doorway of the circulating deflector.

Moreover, according to an aspect of the present invention, it is possible to provide the circulating deflector which can ameliorate the operationality and restrain malfunction and abnormal heating.

### Brief Description of Drawings

FIG. 1 is a perspective view illustrative of a configuration of a ball screw
FIG. 2 is a cross-sectional view of a nut of a ball screw
FIGs. 3A and 3B are diagrams illustrative of a configuration of a circulating deflector according to the invention in which FIG. 3A is a perspective view illustrative of a configuration of a divided body constituting the circulating deflector and FIG. 3B is a plan view illustrative of the configuration of the divided body;
FIGs. 4A and 4B are cross-sectional views illustrative of the configuration of the divided body of the circulating deflector in which FIG. 4A is a diagram illustrating a configuration of a return path (return groove) and FIG. 4B is an enlarged view of X portion in FIG. 4A;
FIGs. 5A and 5B are cross-sectional views illustrative of the configuration of the return path of the circulating deflector, in which FIG. 5A is a cross-sectional view illustrative of the configuration of the return path of the circulating deflector and FIG. 5B is a cross-sectional view illustrative of the configuration of the return path of the circulating deflector according to a modification example
FIGs. 6A and 6B are diagrams illustrative of an aspect of mounting the circulating deflector to the nut , in which FIG. 6A is a side view and FIG. 6B is a front view from an axial direction;
FIGs. 7A-7C are front views from the axial direction illustrative of an aspect of mounting the circulating deflector to the nut according to a modification example ;
FIG. 8 is a front view illustrative of a ball screw ;
FIG. 9 is a front view illustrative of the nut constituting a ball screw;
FIG. 10 is a cross-sectional view taken along line A-A of FIG. 9;
FIG. 11 is a front view (view as seen from a side disposed at an outer circumferential surface of the nut) of the deflector constituting a ball screw;
FIG. 12 is a rear view (view as seen from a side disposed at an inner circumferential surface of the nut) of the deflector constituting a ball screw;
FIG. 13 is a cross-sectional view illustrative of a portion at which a through hole of the inner circumferential surface of the nut is formed;
FIG. 14 is a cross-sectional view illustrative of the inner circumferential surface of the nut to which the deflector is mounted;
FIG. 15 is a diagram illustrative of the deflector of FIG. 12 as divided into divided bodies;
FIG. 16 is a diagram of a divided body which is an end component as seen along a division surface of a body portion as indicated by lines A-A and B-B of FIG. 11;
FIG. 17 is a perspective view of the divided body which is the end component;
FIG. 18 is a cross-sectional view illustrative of a divided body which is an intermediate component as taken along line B-B of FIG. 15;
FIG. 19 is a diagram illustrating a method of fixing the deflector to the nut;
FIG. 20 is a diagram illustrating a method of fixing the deflector to the nut as different from that of FIG. 19;
FIG. 21 is a front view (view as seen from a side disposed at the outer circumferential surface of the nut) of the deflector including four divided bodies; and
FIG. 22 is a rear view (view as seen from a side disposed at the inner circumferential surface of the nut) of the deflector of FIG. 21 as divided into the divided bodies.

### Description of Embodiments

In the following detailed description, numerous specific details are set forth in order to provide a thorough understanding of the present invention. However, it will be apparent that even without such specific details, one or more examples can be implemented. In addition, for simplifying the drawings, well-known structures and devices are depicted in schematic views.

Hereinafter, a first example of a circulating deflector and a ball screw provided with the same will be described with reference to the drawings.

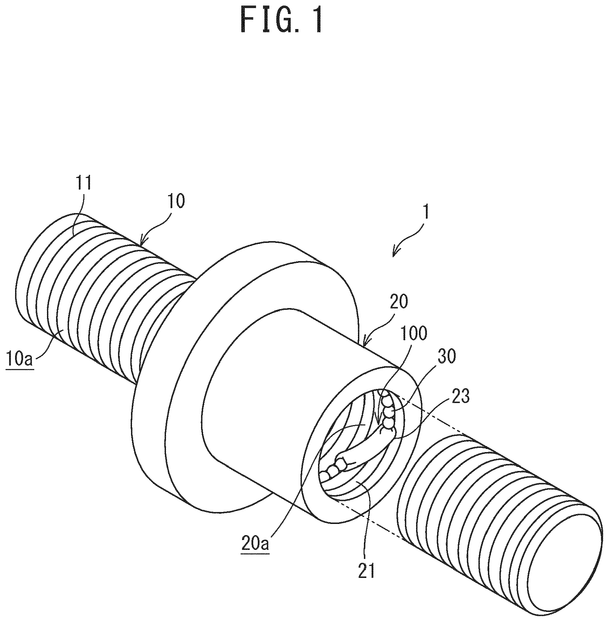

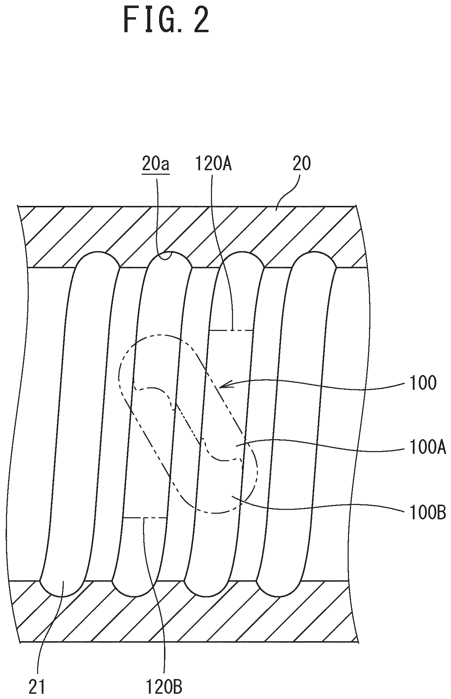

FIG. 1 is a perspective view illustrative of a configuration of the ball screw of an internal circulation type according to the present example and in the same drawing, a nut 20 is illustrated while cut along a surface containing an axial line thereof. Further, FIG. 2 is a cross-sectional view of the nut in the ball screw according to the present example

. Note that in FIG. 2, in the cross-sectional view of the nut, a position at which the circulating deflector is disposed is also indicated.

### (Ball Screw)

As illustrated in FIG. 1, a ball screw 1 is configured to include a screw shaft 10, a nut 20, and rolling elements (e.g. ball) 30.

In the screw shaft 10, an outer circumferential surface 10a thereof is provided with a spirally-shaped spiral groove 11 having a predetermined lead. The nut 20 has a substantially cylindrical shape, in which an inner diameter thereof is formed to be greater than an outer diameter of the screw shaft 10, and fits on the screw shaft 10 with a predetermined gap.

The nut 20 includes a flange 22 at one end thereof for coupling with a guide object. An inner circumferential surface 20a of the nut 20 is provided with a spirally-shaped spiral groove 21 having a lead identical to that of the screw shaft 10. Then, the spiral groove 11 and the spiral groove 21 of the screw shaft 10 and the nut 20, respectively, which face each other form a raceway have a substantially circular cross section. Then, in this raceway, the plurality of rolling elements 30 are filled to be disposed.

Further, as illustrated in FIG. 1, the nut 20 is provided with a circulating deflector insertion hole 23 for mounting a circulating deflector 100. This circulating deflector insertion hole 23 is made of an oblong hole which penetrates from an outer circumference toward an inner circumference of the nut 20. This oblong hole is machined, for example, by an end mill and formed by tilting the end mill at a predetermined angle with respect to a line orthogonal to a center line of the nut 20. This predetermined angle is set to be such an angle that the rolling elements 30 rolling through the spiral groove 11 fail to sharply change a direction due to a cylindrically-shaped return path (also referred to as ball return path) 111 provided to the circulating deflector 100. Note that the circulating deflector insertion hole 23 is machined to be provided in a plural number (three or the like, for example) in accordance with the number of the circulating deflectors 100 at equal intervals in a circumferential direction of the nut 20.

### (Circulating Deflector)

Next, the circulating deflector 100 as described above will be described in further detail.

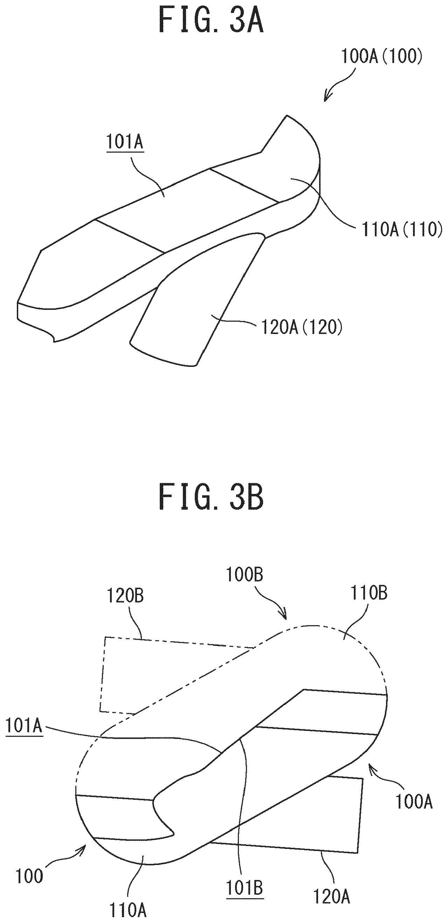

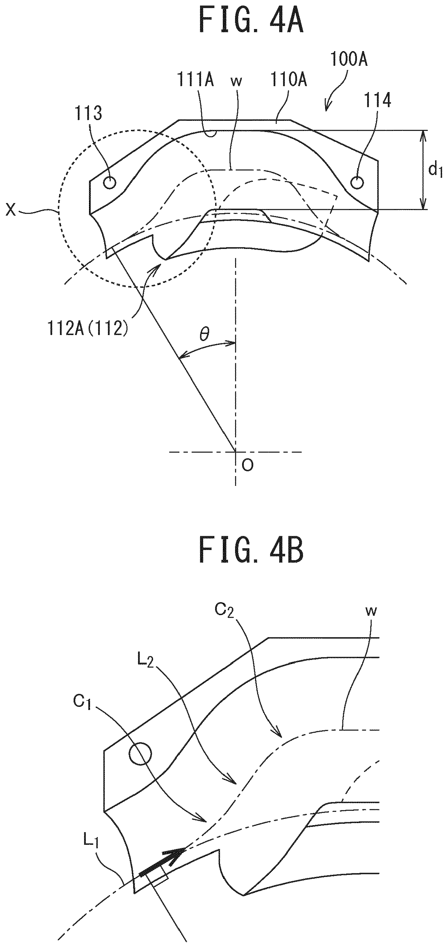

FIGs. 3A and 3B are diagrams illustrative of a configuration of the circulating deflector according to the present invention in which FIG. 3A is a perspective view illustrative of a configuration of a divided body constituting the circulating deflector and FIG. 3B is a plan view illustrative of the configuration of the divided body. Note that FIG. 3A illustrates only one (first divided body) of two divided bodies. Moreover, FIGs. 4A and 4B are cross-sectional views along a circulation passage, illustrative of the configuration of the divided body of the circulating deflector according to the present invention in which FIG. 4A is a diagram illustrating a configuration of the return path (return groove) and FIG. 4B is an enlarged view of X portion in FIG. 4A.

The circulating deflector 100 is molded, for example, from a sintered alloy or the like. As illustrated in FIG. 2, the circulating deflector 100 includes a circulating deflector body 110 provided with the return path 111 and two engagement portions 120, 120 provided to project from longitudinal both side surfaces of the circulating deflector body 110 in directions opposite to each other.

Note that a single circulating deflector 100 is provided for a single loop of a ball row filled and arranged in the ball screw 1. In other words, the number of loops of the rolling elements 30 is determined from a load and the like applied to the ball screw 1 and thus, the number (three or the like, for example) of the circulating deflectors 100 is appropriately determined in accordance with the load applied to the ball screw 1 and the like.

### (Circulating Deflector Body)

As illustrated in FIG. 2, the circulating deflector body 110 is mounted in each circulating deflector insertion hole 23 of the nut 20. In other words, an outer shape of the circulating deflector body 110 is formed to match with the circulating deflector insertion hole 23 of the nut 20 as described above.

In the interior of the circulating deflector body 110, there is formed the cylindrically-shaped return path 111 which connects one end of the above raceway and the other end of the raceway at one loop behind. This return path 111 is formed to extend to form a substantially S shape in a longitudinal direction of the circulating deflector body 110 and open toward an inner circumferential side of the nut 20. This substantially S shape is a shape determined from a function for returning the rolling elements 30. In other words, the return path 111 is required to change a course of the rolling elements 30 in such a manner as to return the rolling elements 30 rolling in the above raceway to the raceway at one loop behind and match with the raceway. Accordingly, when its planar shape is configured to be a cam curve, to restrain a sharp change of an acceleration with respect to its lift, for example, as a result of combination with a cam curve corresponding to a distorted sine curve, formation into the substantially S shape is made.

Moreover, in the vicinity of at least one opening portion of the return path 111 of the circulating deflector 100, a tongue portion 112 for guiding the rolling elements 30 into the return path 111 is provided (see FIG. 4A).

This return path 111 forms a cylindrical (tunnel) shape in which from the tongue portion 112 provided at both end portions of the circulating deflector 100 in the longitudinal direction toward a center portion of the circulating deflector body 110 in the longitudinal direction, a cross section of the circulating deflector body 110 in a lateral direction continuously has a U shape having an inner diameter matching with an outer diameter of the rolling elements 30, which is integrated with the above substantially S shape.

### (Engagement Portion)

The engagement portions 120 are provided such that each of the engagement portions 120, 120 is projected along the spiral groove 11 when the circulating deflector 100 is mounted in the circulating deflector insertion hole 23 of the nut 20. The respective engagement portions 120, 120 are thus provided, whereby the engagement portions 120, 120 each extend in directions opposite to each other to engage with the adjacent spiral grooves 11, 11, which produces an effect in which the circulating deflector 100 is suitably fixed.

Thus, the circulating deflector 100 is provided with the return path 111 (and the tongue portion 112), thereby efficiently picking up the rolling elements 30 rolling in the raceway toward the circulating deflector 100 in a radial direction of the screw shaft 10, and allowing the same to ride over a screw thread thereof and return to the raceway at one loop behind (one lead behind) so that the circulating deflector 100 circulates through the rolling elements 30. Then, a passage formed by this return path 111 and the raceway forms a substantially ring-shaped infinite circulation passage outside the screw shaft 10. Thereby, in accordance with relative rotation of the screw shaft 10 with respect to the nut 20, the rolling elements 30 make rolling motion between the spiral groove 11 and the spiral groove 21 so that the nut 20 can make linear motion in an axial direction of the screw shaft 10 with respect to the screw shaft 10.

### (Divided Body)

Herein, as illustrated in FIGs. 3A and 3B, the circulating deflector body 110 includes two divided bodies 110A, 110B provided with joining surfaces 101A, 101B, respectively, in such a manner as to be orthogonal to the return path 111 provided to the circulating deflector 100. Specifically, the above two engagement portions 120, 120 are provided as two engagement portions 120A, 120B provided to project from both side surfaces of the divided bodies 110A, 110B in direction opposite to each other.

Then, the above return path 111 is formed of return grooves provided on a joining surface side of the respective divided bodies 110A, 110B (see FIG. 4A only with respect to one of which, a return groove 111A) by superposing the divided bodies 110A, 110B. Hereinafter, the shape of the return path 111 will be described with respect to the return groove 111A in FIGs. 4A and 4B.

As illustrated in FIG. 4A, the return path 111 is also required to be configured such that the rolling elements 30 entering the same can ride over the outer diameter of the screw shaft 10 and match with a ring-shaped cross section of the nut 20. Accordingly, this return path 111 is formed in such a manner as to have a circular arc shape most depressed at a center position of the circulating deflector body 110 (divided body 110A) in the longitudinal direction.

Moreover, a diameter d1 (see FIG. 4A) of the return path 111 is set to be more than 1.0 time but not greater than 1.1 times as great as that of the rolling elements 30. As thus set, a gap between the rolling elements 30 and the return path 111 is made to be small so that a so-called "zig zag alignment" in which the rolling elements deviate from a rolling direction to be positioned in a staggered manner in the raceway (including the return path) can be restrained.

Further, as illustrated in FIG. 4A, the joining surfaces 101A, 101B of the divided bodies 110A, 110B, respectively, are provided with two alignment portions 113, 114, respectively, which serve as a guide for alignment when the divided body 110A and the divided body 110B are superposed. These alignment portions 113, 114 are provided as a raised portion or a recessed portion of different configurations on the same joining surfaces 101A, 101B, the alignment portion 113 of the divided body 110A and the alignment portion 114 of the divided body 110B fit together, and the alignment portion 114 of the divided body 110A and the alignment portion 113 of the divided body 110B fit together.

Moreover, as illustrated in FIGs. 4A and 4B, the return path 111 may be configured in such a manner that a center line w of the return path 111 includes a line L1 for picking up the rolling elements 30 into a direction substantially orthogonal to a pick-up angle θ based on an axial center O of the screw shaft 10 and a line L2 making connection between two or more curves, such as a curve C1 and a curve C2, in the return path 111.

### (Modification Example

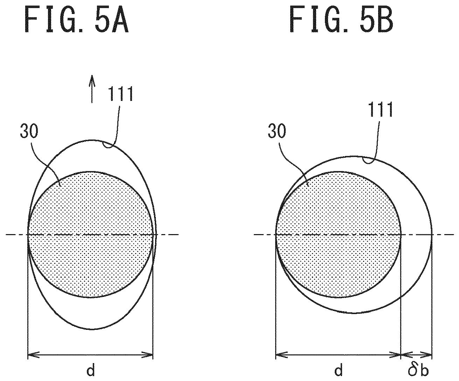

FIGs. 5A and 5B are cross-sectional views illustrative of the configuration of the return path of the circulating deflector, in which FIG. 5A is a cross-sectional view illustrative of the configuration of the return path of the circulating deflector according to the first example and FIG. 5B is a cross-sectional view illustrative of the configuration of the return path of the circulating deflector according to a modification example of the first example.

As a modified example of the first example of the circulating deflector 100 and the ball screw provided with the same, as illustrated in FIG. 5B, a cross section of the return path 111 may have an oval shape having a long diameter in a radial direction (illustrated by an arrow in the drawing) more than 1.0 time but not greater than 1.1 times as great as the diameter d of the rolling elements 30. As thus configured, a gap δb between the rolling elements and the return path is made to be further small so that a so-called "zig zag alignment" in which the rolling elements deviate from a rolling direction to be positioned in a staggered manner in the raceway (including the return path) can be further restrained. As a result, as compared with an aspect in which the cross section of the return path 111 is circular as illustrated in FIG. 5A, the functionality of the ball screw is further improved and reduction of circulation noises of the rolling elements is further enhanced.

As described above, according to the circulating deflector according to the present example
the return path is configured to have a cylindrical shape, the tongue portion and the engagement portions are provided, and the shape and the diameter of the return path are defined, whereby the functionality of the circulating deflector type ball screw can be further improved and reduction in circulation noises of the rolling elements can be achieved.

### (Second example

Hereinafter, a second example of the circulating deflector and the ball screw provided with the same will be described with reference to the drawings. Note that in the present example members and portions similar to those of the above first embodiment are assigned the same reference signs and overlapping description thereof may be omitted. In other words, since the present embodiment is equivalent to the first example in the structure of the ball screw but different in an aspect of installing the circulating deflector, description on the ball screw with reference to FIGs. 1-3 will be omitted and an aspect of the circulating deflector will be mainly described.

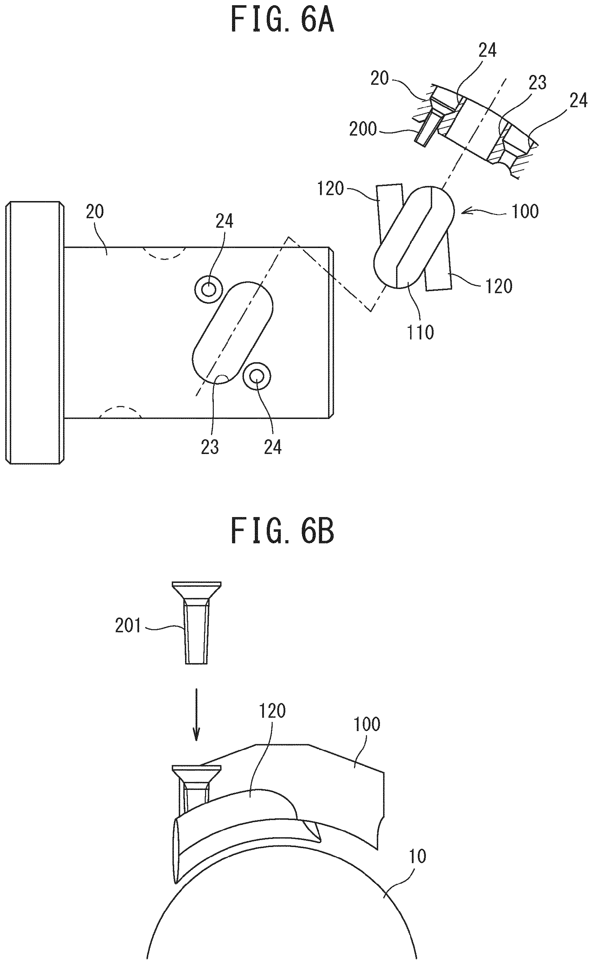

FIGs. 6A and 6B are diagrams illustrative of an aspect of mounting the circulating deflector to the nut according to the second example in which FIG. 6A is a side view and FIG. 6B is a front view from an axial direction. Note that in FIG. 6A, a cross-sectional view of the nut is also depicted for the understanding of the description.

### (Through Hole)

In the present example as illustrated in FIGs. 6A and 6B, around the circulating deflector insertion hole 23 of the nut 20, plural through holes 24 each of which exposes the engagement portion 120 as described below when the circulating deflector 100 is mounted in the circulating deflector insertion hole 23 are provided. Two or more through holes 24 are provided at diagonal positions with the circulating deflector insertion hole 23 interposed therebetween. To these through holes 24, there is provided a fixing member 200 which urges the engagement portion 120 of the circulating deflector 100 mounted in the circulating deflector insertion hole 23 and consequently fixes the circulating deflector 100. Note that as long as the fixing member 200 is provided to the through hole 24 to fix the circulating deflector 100, the aspect of installing the same is not limited.

### (Circulating Deflector)

Next, the circulating deflector 100 as described above will be described in further detail.

The circulating deflector 100 is molded, for example, from a sintered alloy or the like. As illustrated in FIG. 2, the circulating deflector 100 includes the circulating deflector body 110 provided with the return path 111 and the two engagement portions 120, 120 provided to project from the longitudinal both side surfaces of the circulating deflector body 110 in directions opposite to each other.

Note that a single circulating deflector 100 is provided for a single loop of a ball row filled and arranged in the ball screw 1. In other words, the number of loops of the rolling elements 30 is determined from a load applied to the ball screw 1 and the like, and thus the number (three or the like, for example) of the circulating deflectors 100 is appropriately determined in accordance with the load applied to the ball screw 1 and the like.

### (Circulating Deflector Body)

As illustrated in FIG. 1, the circulating deflector body 110 is mounted in each circulating deflector insertion hole 23 of the nut 20. In other words, an outer shape of the circulating deflector body 110 is formed to match with the circulating deflector insertion hole 23 of the nut 20 as described above. In the circulating deflector body 110, a step portion (unillustrated) is provided around the circulating deflector body 110 such that the circulating deflector body 110 does not fall off to an outer circumferential surface side, when mounted, from the inner circumferential surface 20a of the nut 20.

In the interior of the circulating deflector body 110, there is formed the cylindrically-shaped return path 111 which connects one end of the above raceway and the other end of the raceway at one loop behind. This return path 111 is formed to extend to form the substantially S shape in the longitudinal direction of the circulating deflector body 110 and open toward the inner circumferential side of the nut 20. This substantially S shape is a shape determined from a function for returning the rolling elements 30. In other words, the return path 111 is required to change a course of the rolling elements 30 in such a manner as to return the rolling elements 30 rolling in the above raceway to the raceway at one loop behind and match with the raceway. Accordingly, when its planar shape is configured to be a cam curve, to restrain a sharp change of an acceleration with respect to its lift, for example, as a result of combination with a cam curve corresponding to a distorted sine curve, formation into the substantially S shape is made.

Moreover, in the vicinity of at least one opening portion of the return path 111 of the circulating deflector 100, a tongue portion (unillustrated) for guiding the rolling elements 30 into the return path 111 is provided.

This return path 111 forms a cylindrical (tunnel) shape in which from the tongue portion provided at both end portions of the circulating deflector 100 in the longitudinal direction toward the center portion of the circulating deflector body 110 in the longitudinal direction, the cross section of the circulating deflector body 110 in the lateral direction continuously has a U shape having an inner diameter matching with an outer diameter of the rolling elements 30, which is integrated with the above substantially S shape.

### (Engagement Portion)

The engagement portions 120 are provided such that each of the engagement portions 120, 120 is projected along the spiral groove 11 when the circulating deflector 100 is mounted in the circulating deflector insertion hole 23 of the nut 20.

Further, as illustrated in FIGs. 6A and 6B, the fixing member 200 provided to each of the plurality of through holes 24 of the nut 20 urges the engagement portion 120 so that the engagement portion 120 is sandwiched between the fixing member 200 and the spiral grooves 11, 11 to be fixed. Note that fixing the circulating deflector 100 by the fixing member 200 (urging the engagement portion 120) is made by an urging force to such an extent as not to prevent rotation of the screw shaft 10.

The engagement portions 120, 120 each extends in directions opposite to each other to engage with the adjacent spiral grooves 11, 11 and is urged also by the fixing member 200, which produces an effect in which the circulating deflector 100 is suitably fixed.

Thus, the circulating deflector 100 is provided with the return path 111 (and the tongue portion) , thereby efficiently picking up the rolling elements 30 rolling in the raceway toward the circulating deflector 100 in a radial direction of the screw shaft 10, and allowing the same to ride over a screw thread thereof and return to the raceway at one loop behind (one lead behind) so that the circulating deflector 100 circulates through the rolling elements 30. Then, a passage formed by this return path 111 and the raceway forms a substantially ring-shaped infinite circulation passage outside the screw shaft 10. Thereby, in accordance with relative rotation of the screw shaft 10 with respect to the nut 20, the rolling elements 30 make rolling motion between the spiral groove 11 and the spiral groove 21 so that the nut 20 can make linear motion in an axial direction of the screw shaft 10 with respect to the screw shaft 10.

### (Divided Body)

Herein, as illustrated in FIGs. 3A and 3B, the circulating deflector body 110 may be of an aspect including the two divided bodies 110A, 110B provided with the joining surfaces 101A, 101B, respectively, in such a manner as to be orthogonal to the return path 111 provided to the circulating deflector 100. Specifically, the above two engagement portions 120, 120 may be provided as two engagement portions 120A, 120B provided to project from both side surfaces of the divided bodies 110A, 110B in direction opposite to each other.

Then, the above return path 111 is formed of the return grooves provided on the joining surface side of the respective divided bodies 110A, 110B (see FIG. 6A only with respect to one of which, a return groove 111A) by superposing the divided bodies 110A, 110B.

### (Modification Example of Second example

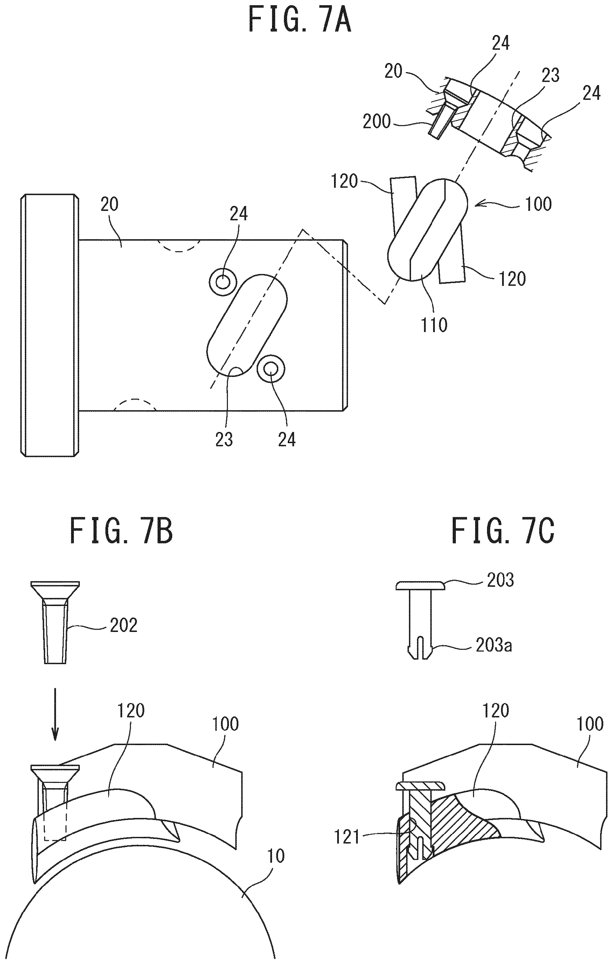

FIGs. 7A-7C are front views from the axial direction illustrative of an aspect of mounting the circulating deflector to the nut according to a modification example of the second example Note that in FIGs. 7B and 7C, the nut and the spiral groove of the screw shaft are omitted.

As a modified example of the second example of the circulating deflector 100 and the ball screw provided with the same, as illustrated in FIGs. 7A and 7B, into each of the engagement portions 120, 120 of the circulating deflector 100, a fixing member 202 (200) provided to the through hole 24 may be fitted or screwed, whereby the circulating deflector 100 may be fixed to the nut 20. For example, when as the fixing member 202, a member having a nail shape is employed, into the engagement portions 120, 120 made of a soft material, the fixing member 202 made of a hard material having a hardness greater than that of the engagement portions 120 is fitted to fix the circulating deflector 100 to the nut 20. On the other hand, when as the fixing member 202, a male screw (wood screw) is employed, into the engagement portions 120, 120 made of a soft material, the fixing member 202 made of a hard material having a hardness greater than that of the engagement portions 120 is screwed to fix the circulating deflector 100 to the nut 20.

Such a configuration allows an operation of fixing the circulating deflector 100 to the nut 20 to be easily and assuredly performed.

Moreover, as another example of the circulating deflector 100 and the ball screw provided with the same, as illustrated in FIG. 7C, to each of the engagement portions 120, 120 of the circulating deflector 100, fixing holes 121, 121 into which the fixing member 201 provided to the through hole 24 is fitted may be provided, and a fixing member 203 (200) may include a lock portion 203a for "fall prevention" to be locked with the fixing hole 121. This fixing member 203 is, for example, a pin, and the lock portion 203a is a so-called "return". A head portion of the pin may be of an integrated type, and as a separate element, a fastening structure, such as a triangular screw, may be provided to the head portion of the pin to be integrated with each other.

Such a configuration also enables easy and assured fixing of the circulating deflector 100 to the nut 20.

As described above, according to the circulating deflector and the ball screw provided with the same according to the present example the fixing member is in contact with the engagement portion of the circulating deflector and the through hole for fixing the circulating deflector to the nut is provided to the nut so that it is possible to provide the circulating deflector and the ball screw provided with the same in which the number of components is small and malfunction and abnormal heating can be restrained.

### (Third example

Hereinafter, a third example of the ball screw will be described, but this invention is not limited to the example as described below. The example as described below includes technically favorable limitations to perform this example but these limitations are not essential to this invention.

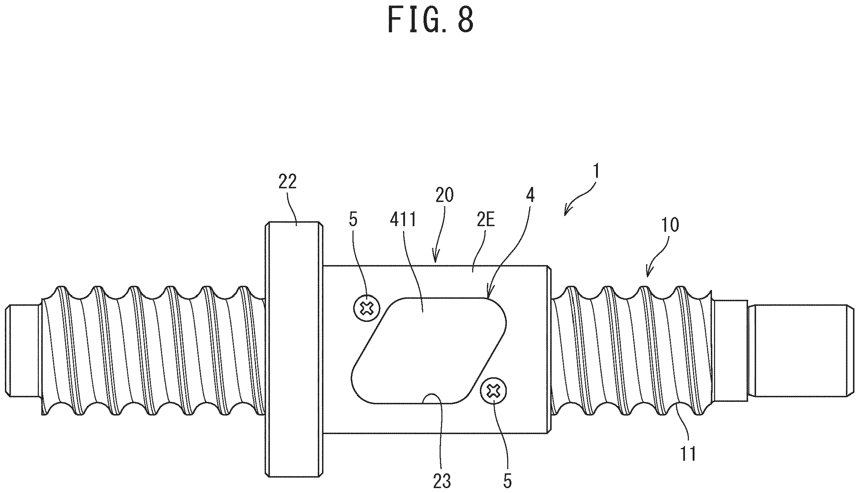

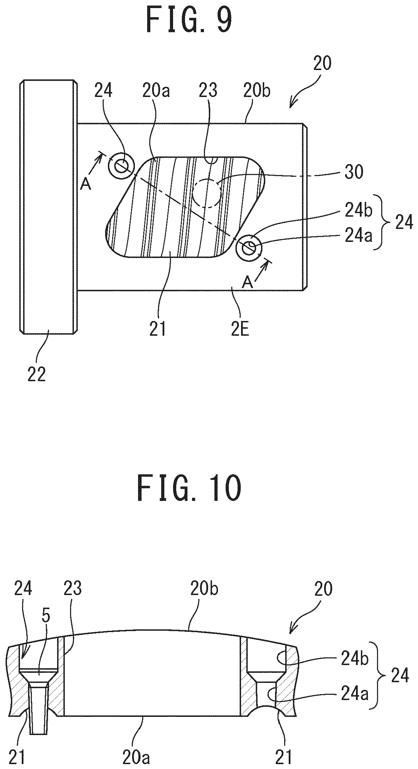

As illustrated in FIGs. 8-10, the ball screw 1 according to this example includes the screw shaft 10, the nut 20, the plurality of balls 30, a deflector (circulating deflector) 4, and a fixing screw (fixing component) 5. The nut 20 includes a cylindrical portion 2E and the flange portion 22 formed at one end in an axial direction thereof. The outer circumferential surface of the screw shaft 10 is provided with the spiral groove 11, and the inner circumferential surface 20a of the nut 20 is provided with the spiral groove 21. The screw shaft 10 penetrates the nut 20.

The spiral groove 11 of the screw shaft 10 and the spiral groove 21 of the nut 20 form a rolling passage through which the balls 30 roll. The balls 30 are provided in this rolling passage and three circulation paths including three rows of ball return passages 40A-40Cprovided to the deflector 4. The balls 30 roll under load in the rolling passage and circulate in the circulation paths . In the ball screw 1, the screw shaft 10 and the nut 20 relatively move through the balls 30 that roll under load in the rolling passage.

At one part of the cylindrical portion 2E of the nut 20, there is provided the through hole 23 which penetrates in a direction orthogonal to the axial direction and reaches from an outer circumferential surface 20b to the inner circumferential surface 20a. The through hole 23 has a substantially parallelogram planar shape in which four corner portions of a parallelogram are rounded. Long sides of the parallelogram defining the through hole 23 extend along the axial direction of the nut 20, and short sides are tilted in the axial direction of the nut 20. In the through hole 23 of the nut 20, the deflector 4 is provided.

In the vicinity of the through hole 23 of the nut 20, the two through holes 24 of the fixing screw 5 are formed. These through holes 24 are provided on a line connecting a center of the through hole 23 and the two short sides of the parallelogram. Each through hole 24 includes a small diameter portion 24a at which a shaft portion of the fixing screw 5 is disposed and a step portion 24b at which a head portion is disposed.

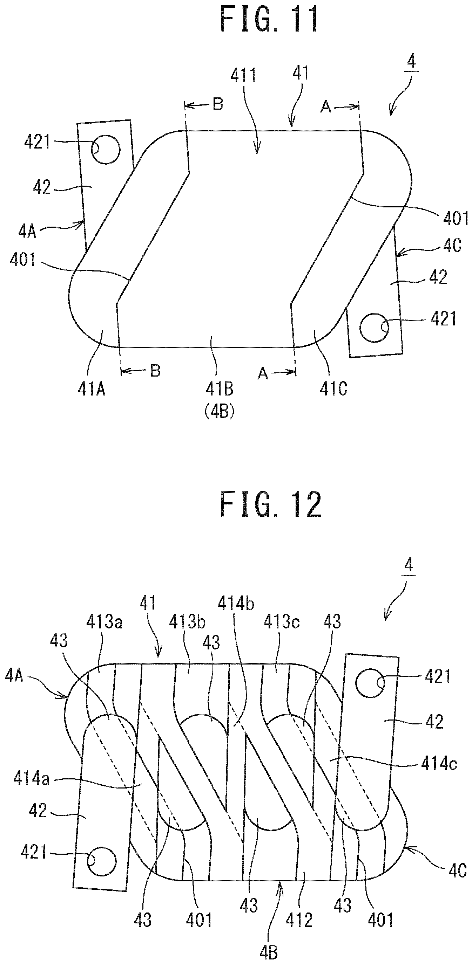

As illustrated in FIGs. 11 and 12, the deflector 4 includes a body portion 41 having the same planar shape as that of the through hole 23 and alignment arms 42 which extends from each short side of a parallelogram defining the body portion 41 to cross a long side. At an end portion of each alignment arm 42, a female screw hole (fixing portion) 421 is provided.

The body portion 41 of the deflector 4 includes an outer circumferential surface 411 formed to be an circular arc surface in conformity with the outer circumferential surface 20b of the nut 20 and an inner circumferential surface 412 formed to be an circular arc surface in conformity with the inner circumferential surface 20a of the nut 20. The outer circumferential surface 411 is illustrated in FIGs. 8 and 11. The inner circumferential surface 412 is illustrated in FIG. 12. The inner circumferential surface 412 of the body portion 41 is provided with three rows of grooves 413a-413c. These grooves 413a-413c are grooves continuous to an end portion of the spiral groove 21 present at both sides sandwiching the through hole 23 when being mounted in the through hole 23 of the nut 20.

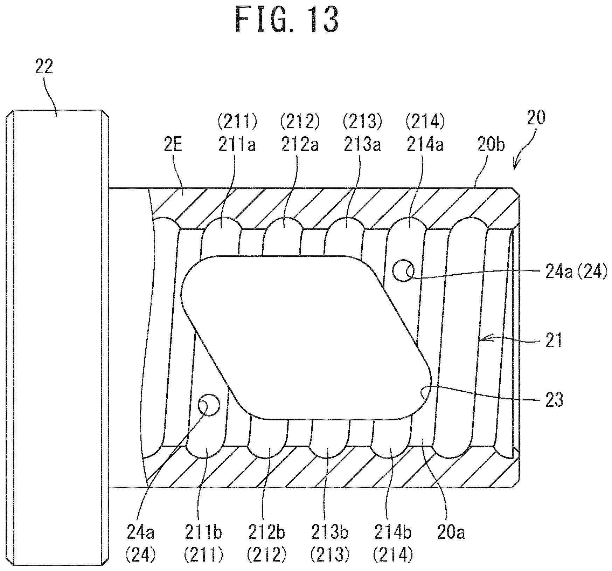

As illustrated in FIG. 13, in a part at which the through hole 23 of the spiral groove 21 of the nut 20 is provided, a first part 211 to a forth part 214 are divided by the through hole 23 into one ends 211a-214a and the other ends 211b-214b.

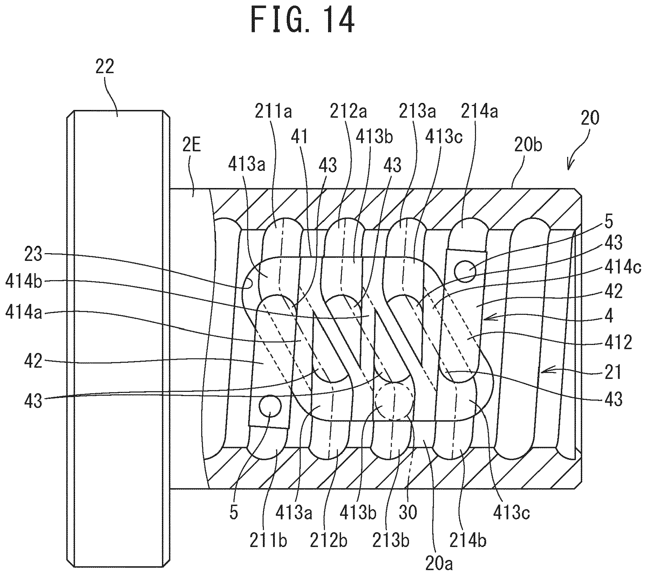

As illustrated in FIG. 14, in the through hole 23, the deflector 4 is provided so that one end of the first groove 413a is continuous to one end 211a of the first part 211 and the other end of the first groove 413a is continuous to the other end 212b of the second part 212. One end of the second groove 413b is continuous to one end 212a of the second part 212 of the spiral groove and the other end of the second groove 413b is continuous to the other end 213b of the third part 213 of the spiral groove. One end of the third groove 413c is continuous to one end 213a of the third part 213 of the spiral groove and the other end of the third groove 413c is continuous to the other end 214b of the fourth part 214 of the spiral groove.

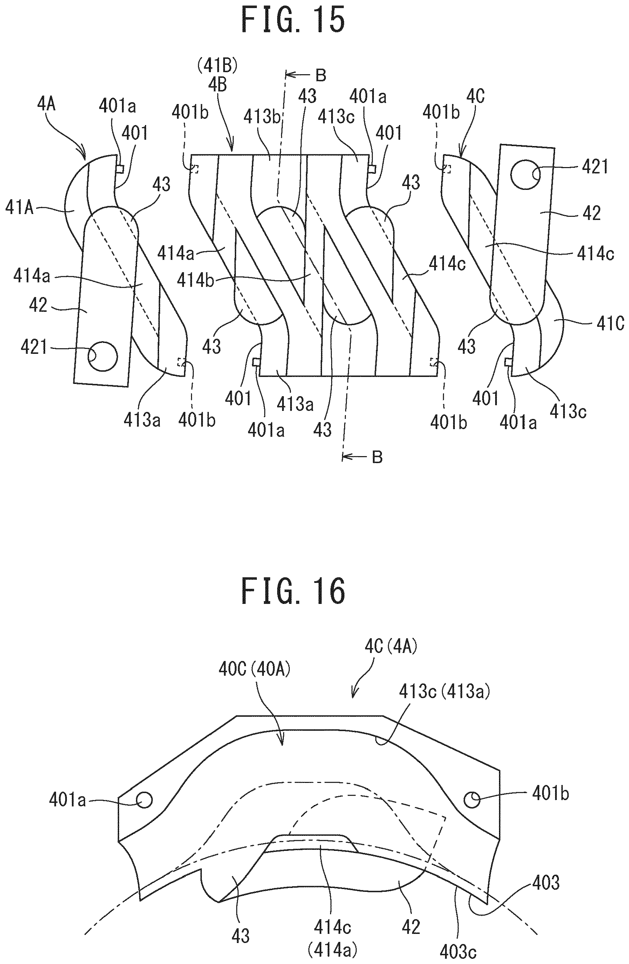

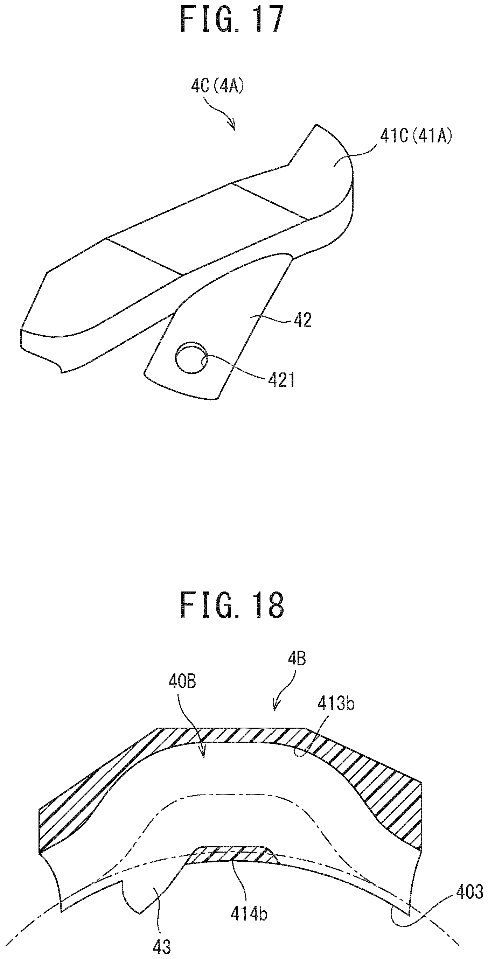

As illustrated in FIGs. 12, 14-16, and 18, the deflector 4 is provided with the three rows of ball return passages 40A-40C in a tunnel shape by the first groove 413a to the third groove 413c and block portions 414a-414c which block a center portion (a part) of an opening surface 403 (see FIGs. 16 and 18) of each of the grooves 413a-413c. Each of the block portions 414a-414c is provided with a pair of tongue portions 43 which guide the balls 30 into the ball return passage 40.

Moreover, as illustrated in FIG. 14, one alignment arm 42 is fitted into the other end 211b of the first part 211 of the spiral groove, and the other alignment arm 42 is fitted into one end 214a of the fourth part 214 of the spiral groove. The other end 211b of the first part 211 of the spiral groove and one end 214a of the fourth part 214 of the spiral groove correspond to the spiral groove in the vicinity of the through hole 23 of the nut 20.

As illustrated in FIGs. 11, 12, and 15, the deflector 4 includes three divided bodies 4A, 4B, 4C which are divided with an end surface 401 along the ball return passages 40A-40C. Accordingly, the body portion 41 is divided into three portions 41A-41C. As illustrated in FIGs. 15 and 17, the divided bodies 4A, 4C are an end component including the alignment arm 42. The divided body 4B is an intermediate component disposed between the divided bodies 4A, 4C. As illustrated in FIGs. 15 and 16, the end surface 401 of the divided bodies 4A, 4C which are the end components is provided with a raised portion 401a at one end of the grooves 413a, 413c and a recessed portion 401b at the other end of the grooves 413a, 413c.

As illustrated in FIG. 15, one end surface 401 of the divided body 4B which is the intermediate component is provided with the recessed portion 401b at one end of the first groove 413a and the raised portion 401a at the other end of the first groove 413a. The other end surface 401 of the divided body 4B which is the intermediate component is provided with the raised portion 401a at one end of the third groove 413c and the recessed portion 401b at the other end of the third groove 413c. Between the divided bodies 4A, 4C which are the end components and the divided body 4B which is the intermediate component, the raised portion 401a and the recessed portion 401b are fitted, whereby alignment is made.

The divided bodies 4A, 4B, 4C can be each manufactured by injection molding of a synthetic resin. As the synthetic resin, it is preferable to use a resin composition in which PPS (polyphenylene sulfide) and POM (polyacetal) are mixed with a reinforcing material including a glass fiber, a potassium titanate fiber, or the like.

When the ball screw 1 according to this embodiment is assembled, first, from an inner circumferential surface 20a side of the nut 20, the body portion 40 of the deflector 4 in which the divided bodies 4A-4C are integrated with each other by fitting the raised portion 401a and the recessed portion 401b to each other is inserted into the through hole 23, and the pair of arms 42 is fitted into the other end 211b of the first part 211 of the spiral groove and one end 214a of the fourth part 214 of the spiral groove.

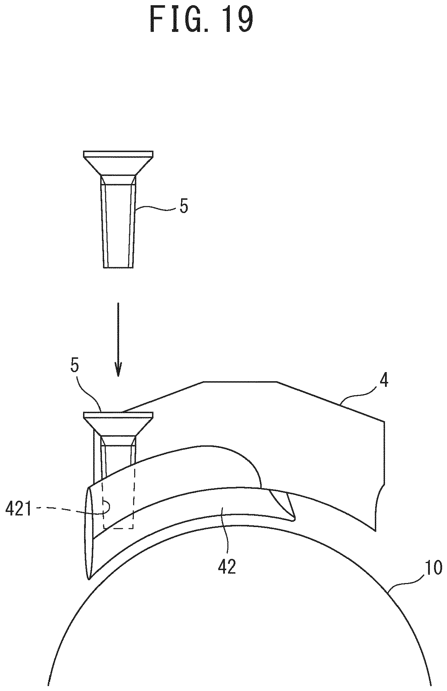

Subsequently, as illustrated in FIG. 19, from an outer side of the nut 20, the two fixing screws 5 are inserted from the outer side into each through hole 24 and a head end thereof is made to threadedly engage with a female screw of each alignment arm 42, thereby fixing the deflector 4 to the nut 20. Accordingly, the spiral groove 21 of the nut 20 and the three rows of ball return passages 40A-40C provided to the deflector 4 are connected. Next, using a provisional shaft, the balls 30 and the screw shaft 10 are assembled to the nut 20.

The ball screw 1 according to this embodiment includes the deflector 4 provided with the three rows of ball return passages 40A-40C formed into a tunnel shape in which the deflector 4 is fixed to the nut 20 by use of the fixing screws 5. Thus, as compared with a deflector crimped to be fixed, a deflector fixing operation is simple. Moreover, the deflector 4 is fixed by the fixing screws 5 to the nut 20 so that contact of the deflector 4 with the screw shaft 10 due to transmission of a component force in a gravity direction from the balls 30 to the deflector 4 during ball circulation can be avoided. Accordingly, malfunction and abnormal heating can be prevented, which consequently improves reliability of the ball screw 1.

Further, the deflector 4 provided with the three rows of ball return passages 40A-40C is made of the three divided bodies 4A-4C, which reduces deflector manufacturing costs as compared with an integrated type deflector.

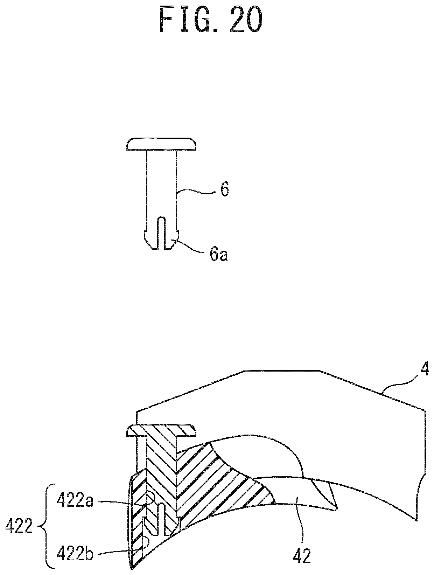

Note that, as a fixing method, as illustrated in FIG. 20, as a fixing component, a fixing pin 6 having a return portion 6a at a head end may be used. In such a case, the arm 42 of the deflector 4 is provided with a through hole 422 including a small diameter hole 422a in which a shaft portion of the fixing pin 6 is disposed and a large diameter portion 422b with which the return portion 6a is made to engage.

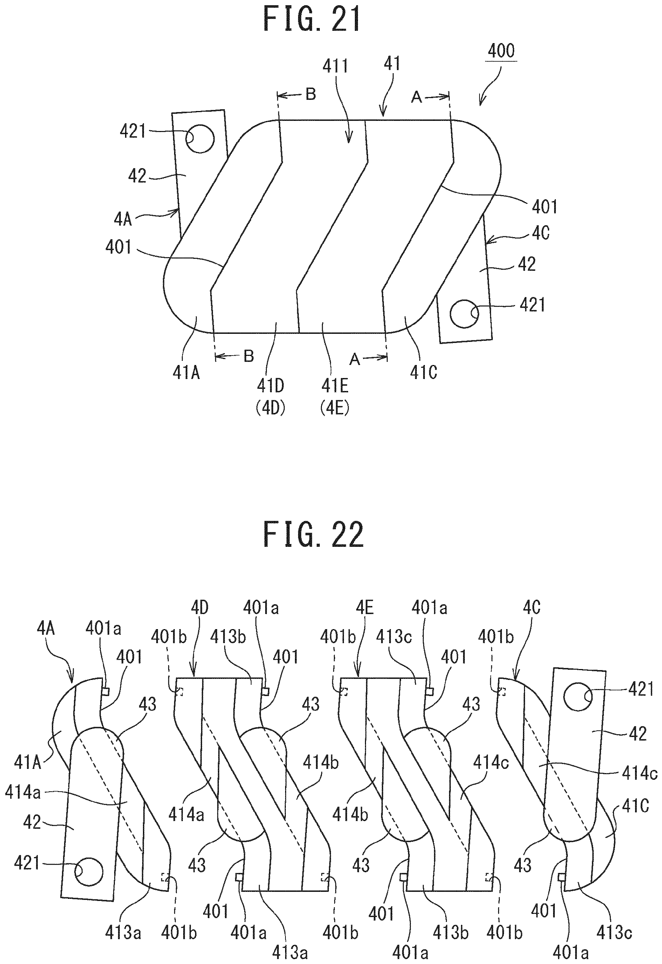

Moreover, the divided body 4B which is the intermediate component can be also further divided into two divided bodies 4D, 4E. A deflector 400 as illustrated in FIGs. 21 and 22 includes four divided bodies 4A, 4C, 4D, 4E obtained by dividing with the end surface 401 along the ball return passages 40A-40C. In such a case, the body portion 41 of the deflector 400 is divided into four parts 41A, 41C, 41D, 41E.

In the deflector 400 as illustrated in FIGs. 21 and 22, the divided bodies 4A, 4C which are the end components are the same as described above. In other words, a view in which the divided bodies 4A, 4C which are the end components are seen along division surfaces of the body portion as indicated by lines A-A and B-B in FIG. 21 is the same as FIG. 16.

One end surface 401 of the divided body 4D which is the intermediate component is provided with the recessed portion 401b at one end of the first groove 413a and the raised portion 401a at the other end of the first groove 413a. The other end surface 401 of the divided body 4D which is the intermediate component is provided with the raised portion 401a at one end of the second groove 413b and the recessed portion 401b at the other end of the second groove 413b.

One end surface 401 of the divided body 4E which is the intermediate component is provided with the recessed portion 401b at one end of the second groove 413b and the raised portion 401a at the other end of the second groove 413b. The other end surface 401 of the divided body 4E which is the intermediate component is provided with the raised portion 401a at one end of the third groove 413c and the recessed portion 401b at the other end of the third groove 413c.

Each between the divided body 4A which is the end component and the divided body 4D which is the intermediate component, between the divided body 4C which is the end component and the divided body 4E which is the intermediate component, between the divided body 4D and the divided body 4E which are the intermediate components, the raised portion 401a and the recessed portion 401b are fitted respectively, whereby alignment is made.

The divided bodies 4D, 4E which are the intermediate components are the same component and have a simple shape as compared with the divided body 4B. Thus, the deflector 400 can reduce more manufacturing costs than that of the deflector 4.

Hereinbefore, the present invention has been described with reference to the specific example . However, such description is not intended to limit the present invention. By referring to the description of the present invention, other embodiments of the present invention in addition to various modifications of the disclosed embodiments are apparent to those skilled in the art.

### Reference Signs List

- 1: Ball screw
- 10: Screw shaft
- 11: Spiral groove
- 20: Nut
- 21: Spiral groove
- 23: Circulating deflector insertion hole (through hole)
- 24: Through hole (insertion hole)
- 30: Rolling element (ball)
- 100: Circulating deflector
- 100A: First divided body
- 100B: Second divided body
- 101A: Joining surface (of first divided body)
- 101B: Joining surface (of second divided body)
- 110: Circulating deflector body
- 110A: First divided body of circulating deflector body
- 110B: Second divided body of circulating deflector body
- 111: Return path
- 111A: Circulation groove of first divided body
- 112: Tongue portion
- 112A: Tongue portion of first divided body
- 113: First alignment portion
- 114: Second alignment portion
- 120: Engagement portion
- 120A: Engagement portion of first divided body
- 120B: Engagement portion of second divided body
- 121: Fixing hole
- 200: Fixing member
- 4: Deflector
- 400: Deflector
- 4A: End component (divided body)
- 4B: Intermediate component (divided body)
- 4C: End component (divided body)
- 4D: Intermediate component (divided body)
- 4E: Intermediate component (divided body)
- 40A-40C: Ball return passage
- 41: Body portion
- 401: End surface of divided body along ball return passage
- 401a: Raised portion
- 401b: Recessed portion
- 411: Outer circumferential surface of body portion
- 412: Inner circumferential surface of body portion
- 413a-413c: Groove
- 414a-414c: Block portion
- 403: Opening surface of groove
- 42: Alignment arm
- 421: Female screw hole (fixing portion)
- 422: Through hole (insertion hole of fixing component)
- 43: Tongue portion
- 5: Fixing screw (fixing component)
- 6: Fixing pin (fixing component)
- 6a: return portion

## Claims

1. A circulating deflector (100, 400) suitable to be mounted in a ball screw (1) including a screw shaft (10) including a spirally-shaped spiral groove (11) at an outer circumferential surface, a nut (20) including a spirally shaped spiral groove (21) at an inner circumferential surface, the nut (20) fitting on the screw shaft (10), and a plurality of rolling elements (30) provided in a raceway formed by the spiral grooves (11, 21),
the circulating deflector (100, 400) is mounted to the nut (20) and includes a cylindrical return path (111) for returning the rolling elements to the raceway behind, and the circulating deflector (100, 400) comprises:
a circulating deflector body (110, 41) including two divided bodies (110A, 110B, 4A, 4B, 4C, 4D, 4E) each provided with a return groove and a joining surface (101A, 101B), the return groove forming the return path (111), the joining surface being formed in such a manner as to be orthogonal to the return path (111); **characterized in that**
an engagement portion (120) is provided to project from each of both side surfaces of the divided bodies (110A, 110B) along the spiral groove (11) of the ball screw (1) and to restrict movement of the circulating deflector body (110), wherein
a fixing hole (121, 421) is provided to the engagement portion (120), and
a fixing member (200, 5, 6) is fitted or threadedly engaged with the fixing hole (121, 421), the fixing member (200, 5, 6) being provided to a through hole which is provided to the nut (20) and exposes the engagement portion (120).

## Patentansprüche

1. Umlaufdeflektor (100, 400), der zur Montage in einer Kugelspindel (1) geeignet ist, mit einer Spindelwelle (10) mit einer spiralförmigen Spiralnut (11) an einer äußeren Umfangsfläche, einer Mutter (20) mit einer spiralförmigen Spiralnut (21) an einer inneren Umfangsfläche, wobei die Mutter (20) auf die Schneckenwelle (10) passt, und mehreren Wälzkörpern (30), die in einer durch die Spiralnuten (11, 21) gebildeten Laufbahn vorgesehen sind, wobei
der Umlaufdeflektor (100, 400) an der Mutter (20) montiert ist und einen zylindrischen Rücklaufweg (111) zum Zurückführen der Wälzkörper zur dahinter liegenden Laufbahn umfasst, wobei der Umlaufdeflektor (100, 400) umfasst:
einen Umlaufdeflektorkörper (110, 41) mit zwei geteilten Körpern (110A, 110B, 4A, 4B, 4C, 4D, 4E), die jeweils mit einer Rücklaufnut und einer Verbindungsfläche (101A, 101B) versehen sind, wobei die Rücklaufnut den Rücklaufweg (111) bildet, wobei die Verbindungsfläche so ausgebildet ist, dass sie orthogonal zum Rücklaufweg (111) ist; **dadurch gekennzeichnet, dass**
ein Eingriffsabschnitt (120) dahingehend vorgesehen ist, der er von jeder der beiden Seitenflächen der geteilten Körper (110A, 110B) entlang der Spiralnut (11) der Kugelspindel (1) vorsteht und die Bewegung des zirkulierenden Deflektorkörpers (110) einschränkt, wobei
ein Befestigungsloch (121, 421) an dem Eingriffsabschnitt (120) vorgesehen ist, und
ein Befestigungselement (200, 5, 6) mit dem Befestigungsloch (121, 421) gepasst oder über Gewinde im Eingriff ist, wobei das Befestigungselement (200, 5, 6) an einem Durchgangsloch vorgesehen ist, das an der Mutter (20) vorgesehen ist und den Eingriffsabschnitt (120) freilegt.

## Revendications

1. Déflecteur circulant (100, 400) approprié pour être monté dans une vis sphérique (1) comprenant une tige de vis (10) comprenant une rainure en spirale en forme de spirale (11) au niveau d'une surface circonférentielle externe, un écrou (20) comprenant une rainure en spirale en forme de spirale (21) au niveau d'une surface circonférentielle interne, l'écrou (20) s'adaptant sur la tige de vis (10), et une pluralité d'éléments de roulement (30) prévus dans un chemin de roulement formé par les rainures en spirale (11, 21),
le déflecteur circulant (100, 400) est monté sur l'écrou (20) et comprend une trajectoire de retour cylindrique (111) pour ramener les éléments de roulement vers le chemin de roulement derrière, et le déflecteur circulant (100, 400) comprend :
un corps de déflecteur circulant (110, 41) comprenant deux corps divisés (110A, 110B, 4A, 4B, 4C, 4D, 4E) chacun prévus avec une rainure de retour et une surface d'assemblage (101A, 101B), la rainure de retour formant la trajectoire de retour (111), la surface d'assemblage étant formée afin d'être orthogonale par rapport à la trajectoire de retour (111) ; **caractérisé en ce que** :
une partie de mise en prise (120) est prévue pour faire saillie de chacune des deux surfaces latérales des corps divisés (110A, 110B) le long de la rainure en spirale (11) de la vis sphérique (1) et pour limiter le mouvement du corps de déflecteur circulant (110), dans lequel :
un trou de fixation (121, 421) est prévu sur la partie de mise en prise (120), et
un élément de fixation (200, 5, 6) est monté ou mis en prise par filetage avec le trou de fixation (121, 421), l'élément de fixation (200, 5, 6) étant prévu sur un trou débouchant qui est prévu sur l'écrou (20) et expose la partie de mise en prise (120) .
